# EUROPEAN PATENT APPLICATION

(11) **EP 4 297 154 A1**
(43) Date of publication of application: **27.12.2023**
(21) Application number: 23181213.2
(22) Date of filing: 23.06.2023
(51) Int. Cl.: H01M 50/103, H01M 50/176, H01M 10/0585, H01M 10/16

(54) **SECONDARY BATTERY**

(30) Priority: 24.06.2022 KR 20220077495
(71) Applicant: Samsung SDI Co., Ltd., Yongin-si, Gyeonggi-do 17084 (KR)
(72) Inventor: LEE, Mi Sun, 17084 Yongin-si (KR); CHOI, Kyu Gil, 17084 Yongin-si (KR); RO, Dae Sung, 17084 Yongin-si (KR); KIM, Dong Hui, 17084 Yongin-si (KR)
(74) Representative: Marks & Clerk LLP

(57) **Abstract**

A secondary battery, including an electrode assembly including a plurality of first electrode plates coated with a first active material, a plurality of second electrode plates coated with a second active material, and a separator positioned between each of the plurality of first electrode plates and each of the plurality of second electrode plates, and a case accommodating the electrode assembly through an internal space, wherein the electrode assembly includes a fixing member on at least one surface in contact with the case.

## Description

### BACKGROUND

### 1. Field

A secondary battery including an electrode assembly, a case, and fixing members is disclosed.

### 2. Description of the Related Art

In general, unlike a primary battery that cannot be charged, a secondary battery is a battery that can be charged and discharged. Secondary batteries may be used in the form of a single battery or in the form of a battery module in which multiple batteries are connected and bundled into a single unit, depending on the type of external device to which the batteries are applied.

### SUMMARY

Embodiments are directed to a secondary battery, including an electrode assembly including a plurality of first electrode plates coated with a first active material, a plurality of second electrode plates coated with a second active material, and a separator positioned between each of the plurality of first electrode plates and each of the plurality of second electrode plates, and a case accommodating the electrode assembly through an internal space, wherein the electrode assembly includes a fixing member on at least one surface in contact with the case.

The fixing member may be attached to at least a portion of a lower surface of the electrode assembly.

The fixing member may be attached to at least one of the side surfaces of the electrode assembly.

The fixing member may be attached to two surfaces facing each other among the side surfaces of the electrode assembly.

An outermost electrode plate located at an end of the electrode assembly may include a semi-coated portion on a region of an outer surface of the outermost electrode plate to which an active material is not applied, and the fixing member may be attached to the semi-coated portion.

A first thickness of the fixing member may correspond to a second thickness of the active material in an area other than the semi-coated portion.

The fixing member may be a tape or spray coating.

The fixing member may include polystyrene or polyethylene.

The first thickness of the fixing member may be 10 µm to 60 µm.

A plurality of first substrate tabs may protrude from the plurality of first electrode plates.

A plurality of second substrate tabs may protrude from the plurality of second electrode plates.

The plurality of first substrate tabs may protrude at regular intervals in a direction substantially perpendicular to the height of the electrode assembly.

The plurality of second substrate tabs may protrude at regular intervals in a direction substantially perpendicular to the height of the electrode assembly.

The plurality of first substrate tabs and the plurality of second substrate tabs may be gathered at one end of the electrode assembly.

The case may further include a lower end portion for accommodating the electrode assembly through an inner groove around a bent region.

The case may further include an upper end portion for sealing the lower end portion by being folded around a boundary in contact with the lower end portion.

A depth of the groove of the lower end portion of the case may correspond to a thickness of the electrode assembly.

The electrode assembly may be accommodated in the lower end portion, and the first substrate tabs and the second substrate tabs may be positioned above the lower end portion.

Embodiments are directed to a secondary battery, including an electrode assembly, and a case accommodating the electrode assembly through an internal space, wherein the electrode assembly includes a first fixing member on a first surface in contact with the case and a second fixing member on a second surface in contact with the case.

Embodiments are directed to a secondary battery, including an electrode assembly including a plurality of first electrode plates coated with a first active material, a plurality of second electrode plates coated with a second active material, and a separator positioned between each of the plurality of first electrode plates and each of the plurality of second electrode plates, a plurality of first substrate tabs protruding from the plurality of first electrode plates, a plurality of second substrate tabs protruding from the plurality of second electrode plates, and a case accommodating the electrode assembly through an internal space, wherein the electrode assembly includes a first fixing member on a first surface in contact with the case and a second fixing member on a second surface in contact with the case.

At least some of the above and other features of the invention are set out in the claims.

### BRIEF DESCRIPTION OF DRAWINGS

Features will become apparent to those of skill in the art by describing in detail embodiments with reference to the attached drawings in which:
FIG. 1 is a perspective view showing a secondary battery including an electrode assembly accommodated in a case according to an example embodiment.
FIG. 2 is a bottom view showing an electrode assembly used in a secondary battery according to an example embodiment.
FIG. 3 is a bottom view showing an electrode assembly used in a secondary battery according to an example embodiment.
FIG. 4 is a bottom view showing an electrode assembly used in a secondary battery according to an example embodiment.
FIG. 5 is a bottom view showing an electrode assembly used in a secondary battery according to an example embodiment.
FIG. 6 is a bottom view showing an electrode assembly used in a secondary battery according to an example embodiment.
FIG. 7 is a bottom view showing an electrode assembly used in a secondary battery according to an example embodiment.
FIG. 8 is a bottom view showing an electrode assembly used in a secondary battery according to an example embodiment.

### DETAILED DESCRIPTION

Example embodiments will now be described more fully hereinafter with reference to the accompanying drawings. However, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below. As used herein, the term "or" is not an exclusive term, e.g., "A or B" would include A, B, or A and B.

Hereinafter, prior to describing an electrode assembly according to an embodiment of the present disclosure with reference to the accompanying drawings, a general electrode assembly structure will be first described.

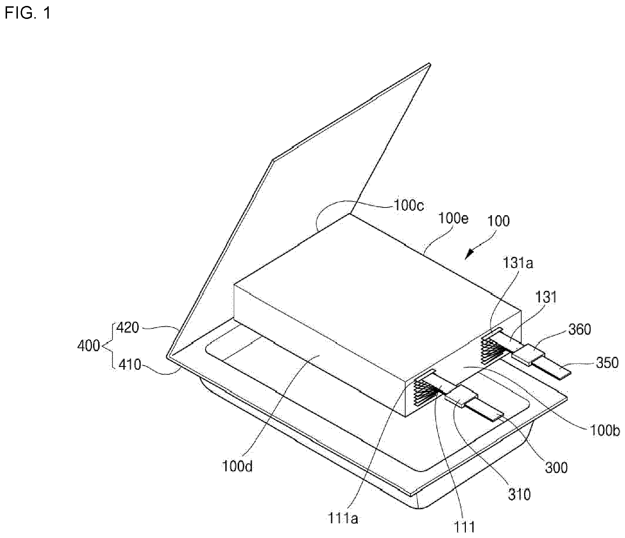

FIG. 1 is a perspective view showing a secondary battery including an electrode assembly accommodated in a case according to an example embodiment. Referring to FIG. 1, the secondary battery according to an embodiment of the present disclosure may include an electrode assembly 100, substrate tabs 111 and 131, lead tabs 300 and 350, and a case 400.

The electrode assembly 100 may have a structure in which a first electrode plate formed by applying a first active material to both surfaces of a substrate, a separator, and a second electrode plate formed by applying a second active material to both surfaces of a substrate are sequentially stacked. The separator may be inserted between both the first electrode plate and the second electrode plate to prevent a short circuit between the electrode plates. In an implementation, the first electrode plate may be a positive electrode plate, and the second electrode plate may be a negative electrode plate, but the polarities may also be reversed.

Meanwhile, a first substrate tab 111 and a second substrate tab 131, which may not be coated with an active material, may be at one of the side ends of the first electrode plate and the second electrode plate, respectively, electrically connected to external electrode terminals. In other words, when the first electrode plates and the second electrode plates include a rectangular shape, the first substrate tab 111 and the second substrate tab 131 may be connected to the first electrode plate and the second electrode plate respectively at a width (e.g., a front end surface 100b and a rear end surface 100c opposite thereto) of the plates. In addition, a first insulating tape 111a and a second insulating tape 131a may be further provided on connection portions of the first substrate tab 111 and the second substrate tab 131 respectively, which may protrude from the respective electrode plates. The first insulating tape 111a and the second insulating tape 131a may provide electrical insulation and physical protection to a connection portion between the first substrate tab 111 and the second substrate tab 131. The connection portion between the first substrate tab 111 and the second substrate tab 131 may include a connection between the first substrate tab 111 and the first electrode plate, and second substrate tab 131 and the second electrode plate respectively.

A plurality of first substrate tabs 111 and second substrate tabs 131, which may protrude from the plurality of electrode plates of the electrode assembly 100, respectively, may protrude at regular intervals in a direction substantially perpendicular to a height of the electrode assembly. Meanwhile, the first substrate tabs 111 and the second substrate tabs 131 may be gathered at one end of the electrode assembly 100, respectively.

In relation to the shapes of the first substrate tabs 111 and the second substrate tabs 131, the first substrate tabs 111 and the second substrate tabs 131 may, respectively, be gathered at an upper end of the electrode assembly and may be welded to the lead tabs 300 and 350, respectively. In addition, a third insulating tape 310 and a fourth insulating tape 360 may, respectively cover welded portions of the first substrate tabs 111 and the lead tab 300, and the second substrate tabs 131 and the lead tab 350. The case 400 may be a case as shown, or may be a can-type case used for a prismatic battery. Hereinafter, for convenience, it will be described as a case type.

The case 400 may include a lower end portion 410 for accommodating the electrode assembly 100 through an inner groove around a bent region, and an upper end portion 420 for sealing the lower end portion 410 by being folded around a boundary in contact with the lower end portion 410. A depth of the groove of the lower end portion 410 may correspond to a thickness of the electrode assembly 100. Therefore, when the electrode assembly 100 is accommodated in the lower end portion 410, the first substrate tabs 111 and the second substrate tabs 131 may be positioned above the lower end portion 410.

As will be described later, a fixing member may be further formed on one surface of the electrode assembly 100, e.g., on a lower surface. The fixing member may be a tape and may be adhered to a position where the electrode assembly 100 is seated within the case 400, thereby preventing the electrode assembly 100 from moving within the case 400.

In addition, the third insulating tape 310 and the fourth insulating tape 360 coupled to the first substrate tab 111 and the second substrate tab 131 may be positioned at a flange of the lower end portion 410. Therefore, the third insulating tape 310 and the fourth insulating tape 360 may prevent the first substrate tab 111 and the second substrate tab 131 from directly contacting the case 400 as well as the lead tabs 300 and 350 connected thereto. As a result, electrical insulation properties may be improved.

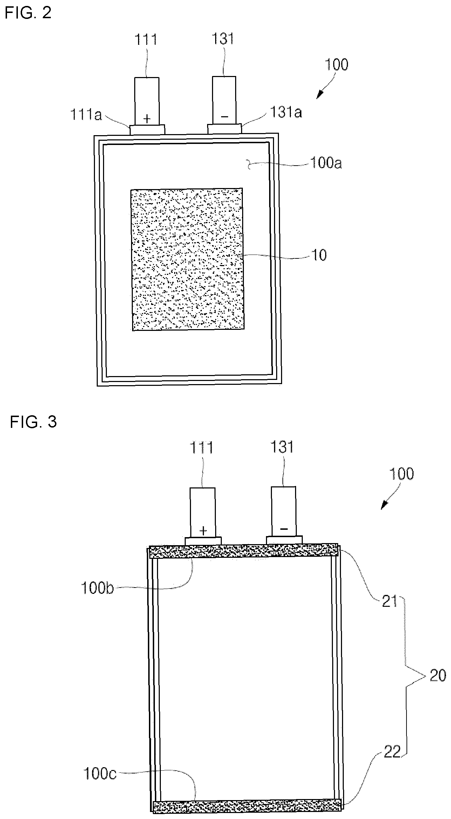

FIG. 2 is a bottom view showing an electrode assembly used in a secondary battery according to an example embodiment. Referring to FIG. 2, in the secondary battery according to an embodiment of the present disclosure, a central fixing member 10 may be formed on a lower surface 100a of the electrode assembly 100, e.g., on a surface of the electrode assembly 100 facing the lower end portion 410 of the case 400. The central fixing member 10 may include an electrically insulating material and may serve to adhere the electrode assembly 100 and the case 400 to each other. The central fixing member 10 may have both sides made of polystyrene (PS) or polyethylene (PE) bonded to an adhesive component. In addition, the central fixing member 10 may be a separate tape attached to the lower surface 100a of the electrode assembly 100 or a separate layer formed by spraying on the lower surface 100a of the electrode assembly 100.

The central fixing member 10 may have a smaller area than the lower surface 100a of the electrode assembly 100, and may be located in the center of the lower surface 100a. The central fixing member 10 may effectively suppress the flow of the electrode assembly 100 by fixing the lower surface 100a of the electrode assembly 100 to the case 400 for a certain area from the center.

In addition, the central fixing member 10 may have a thickness of 10 µm to 60 µm. When the thickness of the central fixing member 10 is 10 µm or more, the central fixing member 10 may fill a portion between the electrode assembly 100 and the case 400, and thus, a fixing force may be advantageously applied. In addition, when the thickness of the central fixing member 10 is 60 µm or less, the thickness of battery, including the thickness of the electrode assembly 100, may not be excessively increased, and thus, the energy density of the secondary battery may be advantageously secured.

FIG. 3 is a bottom view showing an electrode assembly used in a secondary battery according to an example embodiment. Referring to FIG. 3, in the secondary battery according to an embodiment of the present disclosure, a narrow end surface fixing member 20 may be coupled to the front end surface 100b and the rear end surface 100c opposite thereto, which may be regions from which the first substrate tab 111 and the second substrate tab 131 of an electrode assembly 100 protrude. The narrow end surface fixing member 20 may include a first narrow end surface fixing member 21 and a second narrow end surface fixing member 22, which may be coupled to the front and rear end surfaces 100b and 100c, respectively, and may not be coupled to a lower surface 100a, of the electrode assembly 100.

In an implementation, with respect to the front end surface 100b of the electrode assembly 100, the first narrow end surface fixing member 21 may be on a surface other than a region where the first substrate tabs 111 and second substrate tabs 131 protrude. In addition, the second narrow end surface fixing member 22 may entirely surround the rear end surface 100c. Accordingly, the front end surface 100b and the rear end surface 100c of the electrode assembly 100 may be fixed within the case 400.

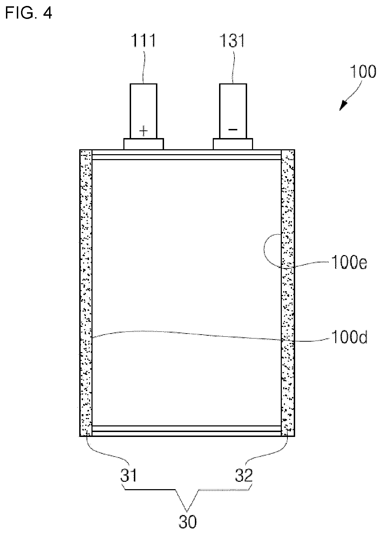

FIG. 4 is a bottom view showing an electrode assembly used in a secondary battery according to an example embodiment. Referring to FIG. 4, in the secondary battery according to an embodiment of the present disclosure, a narrow side surface fixing member 30 may be coupled to a first side surface 100d and a second side surface 100e opposite thereto, of the electrode assembly 100. The first side surface 100d and the second side surface 100e may be defined as two sides respectively connecting the front end surface 100b and the rear end surface 100c. In addition, a first narrow side surface fixing member 31 and a second narrow side surface fixing member 32 of the narrow side surface fixing member 30 may be coupled to the first side surface 100d and the second side surface 100e, respectively.

In an implementation, the first narrow side surface fixing member 31 and the second narrow side surface fixing member 32 may entirely surround the first side surface 100d and the second side surface 100e, respectively. Accordingly, both of the side surfaces 100d and 100e of the electrode assembly 100 may be fixed within the case 400.

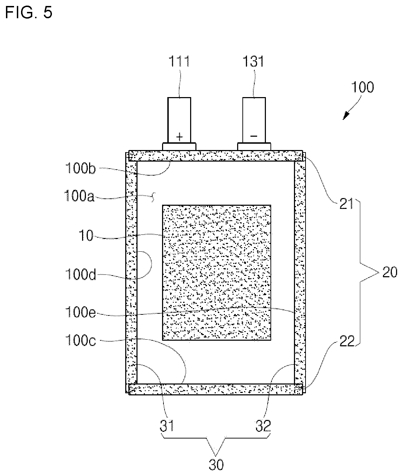

FIG. 5 is a bottom view showing an electrode assembly used in a secondary battery according to an example embodiment. Referring to FIG. 5, in the electrode assembly of a secondary battery according to an embodiment of the present disclosure, all of the fixing members 10, 20, and 30 described in the previous embodiments of FIGS. 2 to 4 may be attached to the electrode assembly 100.

In an implementation, the central fixing member 10 may be attached to the lower surface 100a of the electrode assembly 100, the narrow end surface fixing member 20 may be attached respectively to the front end surface 100b and the rear end surface 100c of the electrode assembly 100, and the narrow side surface fixing member 30 may be attached respectively to the first side surface 100d and the second side surface 100e of the electrode assembly 100, simultaneously.

Since the fixing members 10, 20, and 30 may be coupled to five surfaces of the electrode assembly 100, (all except for the upper surface of the electrode assembly 100), the corresponding surfaces may be fixed in an area in contact with the case 400. Therefore, the position of the electrode assembly 100 may be stably fixed due to fixing members 10, 20, and 30.

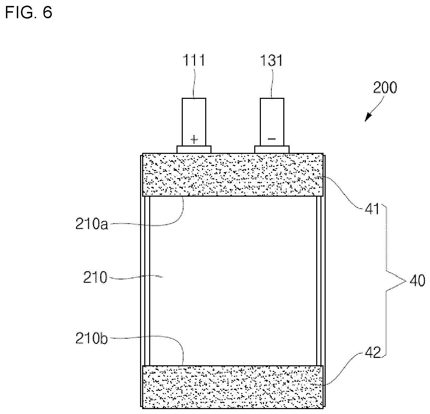

FIG. 6 is a bottom view showing an electrode assembly used in a secondary battery according to an example embodiment. Referring to FIG. 6, with respect to an outermost part of the electrode assembly 200 (a bottom layer of the electrode assembly 200), one of electrode plates, instead of a separator, may be exposed. In addition, as shown in FIG. 6, a first electrode 210 may be exposed, and an active material may not be applied to an upper end 210a and a lower end 210b of the surface of the first electrode 210. In an implementation, the upper end 210a and the lower end 210b of the first electrode 210 may be semi-coatings.

In addition, a wide end surface fixing member 40 may include a first wide end surface fixing member 41 and a second wide end surface fixing member 42, the first wide end surface fixing member 41 and the second wide end surface fixing member 42 may be coupled to the upper end 210a and the lower end 210b of the first electrode 210, respectively. In this case, since the first wide end surface fixing member 41 and the second wide end surface fixing member 42 may be coupled to the upper end 210a and the lower end 210b where no active material exists, the surface of the electrode assembly 200 may not protrude as a whole and may be smooth in shape. In addition, when the wide end surface fixing member 40 has a thickness similar to a coating thickness of the active material, a deviation in the surface attached may be reduced, and thus, the surface of the electrode assembly 200 may be smooth.

Therefore, according to the present embodiment, due to the wide end surface fixing member 40, the electrode assembly 200 may be fixed within the case 400 and at the same time, the energy density may be increased by maximally increasing the size of the electrode assembly 200 within the space of the case 400.

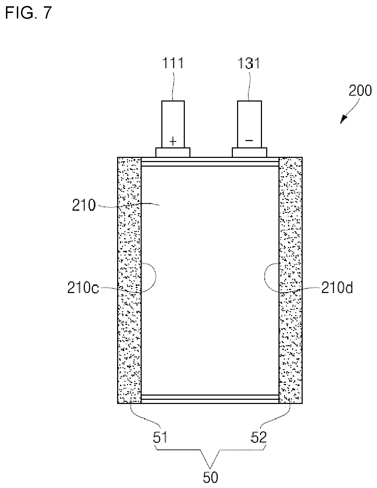

FIG. 7 is a bottom view showing an electrode assembly used in a secondary battery according to an example embodiment. Referring to FIG. 7, in the electrode assembly 200, the first electrode 210 may be exposed, and an active material may not be applied to a first side surface 210c and a second side surface 210d, which may be partial regions of the surface of the first electrode 210. In an implementation, the first side surface 210c and the second side surface 210d of the first electrode 210 may be semi-coatings.

In addition, a wide side surface fixing member 50 may include a first wide side surface fixing member 51 and a second wide side surface fixing member 52, and the first wide side surface fixing member 51 and the second wide side surface fixing member 52 may be coupled to the first side surface 210c and the second side surface 210d of the first electrode 210, respectively.

Therefore, also in the present embodiment, due to the wide side surface fixing member 50, the electrode assembly 200 may be fixed within the case 400, and at the same time, the energy density may be increased by maximally increasing the size of the electrode assembly 200 within the space of the case 400.

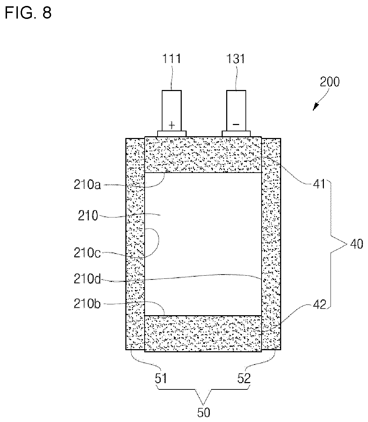

FIG. 8 is a bottom view showing an electrode assembly used in a secondary battery according to an example embodiment. Referring to FIG. 8, in the electrode assembly 200, the first electrode 210 may be exposed, and an active material may not be applied to the upper end 210a, the lower end 210b, the first side surface 210c, and the second side surface 210d, which may be partial regions of the surface of the first electrode 210. In an implementation, in the first electrode 210, the upper end 210a, the lower end 210b, the first side surface 210c, and the second side surface 210d may all be semi-coatings.

In addition, like in the previous embodiments, the wide end surface fixing member 40 and the wide side surface fixing member 50 may be coupled to the upper end 210a, the lower end 210b, the first side surface 210c, and the second side surface 210d of the first electrode 210, respectively. Therefore, in the present embodiment, by forming the wide end surface fixing member 40 and the wide side surface fixing member 50 on all of the upper end 210a, the lower end 210b, the first side surface 210c, and the second side surface 210d of the electrode assembly 200, the electrode assembly 200 may be more stably fixed in position within the case 400.

As described above, according to the present disclosure, by forming a fixing member on one surface of an electrode assembly, the position of the electrode assembly within the case may be stably fixed.

By way of summation and review, as secondary batteries may be used not only as power sources for small electronic devices such as mobile phones and laptop computers, but also for large vehicles such as hybrid vehicles, demand for high-output and high-capacity batteries is rapidly increasing.

In order to supply sufficient power to electronic devices or means of transportation, the structure of a secondary battery should be stably designed. In particular, there is a need for a method for preventing deterioration in cell stability due to a problem such as tearing of an electrode plate of an electrode assembly or breakage of a substrate tab during repeated charging and discharging of a secondary battery. The present disclosure may provide a secondary battery capable of fixing the position of a case or an electrode assembly within the case.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made.

## Claims

1. A secondary battery, comprising:
an electrode assembly including a plurality of first electrode plates coated with a first active material, a plurality of second electrode plates coated with a second active material, and a separator positioned between each of the plurality of first electrode plates and each of the plurality of second electrode plates; and
a case accommodating the electrode assembly through an internal space, wherein the electrode assembly includes a fixing member on at least one surface in contact with the case.

2. The secondary battery as claimed in claim 1, wherein the fixing member is attached to at least a portion of a lower surface of the electrode assembly.

3. The secondary battery as claimed in claim 1 or claim 2, wherein the fixing member is attached to at least one of the side surfaces of the electrode assembly, optionally wherein the fixing member is attached to two surfaces facing each other among the side surfaces of the electrode assembly.

4. The secondary battery as claimed in claim 1, wherein an outermost electrode plate located at an end of the electrode assembly includes a semi-coated portion on a region of an outer surface of the outermost electrode plate to which an active material is not applied, and the fixing member is attached to the semi-coated portion.

5. The secondary battery as claimed in claim 4, wherein:
(i) a first thickness of the fixing member corresponds to a second thickness of the active material in an area other than the semi-coated portion; and/or
(ii) the fixing member is a tape or spray coating.

6. The secondary battery as claimed in any one of claims 1 to 3, wherein the fixing member includes polystyrene or polyethylene.

7. The secondary battery as claimed in any one of claims 1 to 6, wherein a first thickness of the fixing member is 10 µm to 60 µm.

8. The secondary battery as claimed in any one of claims 1 to 7, further comprising a plurality of first substrate tabs protruding from the plurality of first electrode plates.

9. The secondary battery as claimed in claim 8, further comprising a plurality of second substrate tabs protruding from the plurality of second electrode plates.

10. The secondary battery as claimed in claim 9, wherein the plurality of first substrate tabs protrude at regular intervals in a direction substantially perpendicular to a height of the electrode assembly.

11. The secondary battery as claimed in claim 10, wherein the plurality of second substrate tabs protrude at regular intervals in a direction substantially perpendicular to the height of the electrode assembly, optionally wherein the plurality of first substrate tabs and the plurality of second substrate tabs are gathered at one end of the electrode assembly.

12. The secondary battery as claimed in any one of claims 1 to 11, wherein the case further includes a lower end portion for accommodating the electrode assembly through an inner groove around a bent region.

13. The secondary battery as claimed in claim 12, wherein the case further includes an upper end portion for sealing the lower end portion by being folded around a boundary in contact with the lower end portion.

14. The secondary battery as claimed in claim 13, wherein a depth of the groove of the lower end portion of the case corresponds to a thickness of the electrode assembly, optionally wherein the electrode assembly is accommodated in the lower end portion, and the first substrate tabs and the second substrate tabs are positioned above the lower end portion.

15. A secondary battery as claimed in claim 1, wherein:
(i) the electrode assembly includes a first fixing member on a first surface in contact with the case and a second fixing member on a second surface in contact with the case; or
(ii) wherein the secondary battery further comprises:
a plurality of first substrate tabs protruding from the plurality of first electrode plates; and
a plurality of second substrate tabs protruding from the plurality of second electrode plates, wherein the electrode assembly includes a first fixing member on a first surface in contact with the case and a second fixing member on a second surface in contact with the case.
